# EUROPEAN PATENT APPLICATION

(11) **EP 4 459 716 A1**
(43) Date of publication of application: **06.11.2024**
(21) Application number: 22914245.0
(22) Date of filing: 13.12.2022
(51) Int. Cl.: H01M 4/58, H01M 10/0525, H01M 4/134

(54) **COMPOSITE LITHIUM COMPENSATION ADDITIVE, PREPARATION METHOD, AND USE**

(30) Priority: 30.12.2021 CN 202111662402
(71) Applicant: Shenzhen Innovazone Technology Co., Ltd., Shenzhen, Guangdong 518000 (CN)
(72) Inventor: WANG, Yaxiong, Shenzhen, Guangdong 518000 (CN); WAN, Yuanxin, Shenzhen, Guangdong 518000 (CN); KONG, Lingyong, Shenzhen, Guangdong 518000 (CN); ZHONG, Zeqin, Shenzhen, Guangdong 518000 (CN); ZHONG, Wen, Shenzhen, Guangdong 518000 (CN)
(74) Representative: Bals & Vogel Patentanwälte PartGmbB
(86) International application number: PCT/CN2022/138813
(87) International publication number: WO 2023/124990

(57) **Abstract**

The invention discloses a composite lithium compensation additive, a preparation method, and a use. The composite lithium compensation additive comprises an inner core containing an amorphous lithium compensation additive and an encapsulation layer wrapping the outer surface of the inner core. In the composite lithium compensation additive provided in the present invention, the activation potential barrier is low, the lithium removal efficiency is high at a relatively low voltage, and the specific capacity of lithium compensation is high. In the composite lithium compensation additive provided in the embodiments of the present invention, the amorphous lithium compensation additive in the inner core has a smaller polarization, and during charging, the voltage platform is lower, thus being able to effectively reduce the activation barrier of the lithium compensation additive, and markedly improve the deintercalation efficiency of lithium ions, thereby achieving a high specific capacity of lithium compensation in the additive. The packaging layer can improve the stability of the lithium compensation additive, and can also effectively improve the electron and ion conduction performance of the lithium compensation material in the core, improve the stability of the lithium compensation additive, and achieve a stable lithium compensation effect.

## Description

This application claims the benefit of Chinese patent application No. 202111662402.4, titled "Composite Lithium-Supplementing Additive, Preparation Method Therefor and Application Thereof", filed on December 30, 2021 with the Chinese Patent Office, the contents of which are incorporated herein by reference.

### TECHNICAL FIELD

The present application relates to the technical field of battery materials, in particular, to a composite lithium-supplementing additive, a preparation method therefor and application thereof.

### BACKGROUND

During the first charge and discharge cycle of a lithium-ion battery, an SEI film will be formed at the interface of the anode material. The formation of SEI is an irreversible process. The Li⁺ consumed to form the SEI can no longer be intercalated in the cathode material during the discharge process, which will cause the loss of battery capacity. Studies have found that the formation of the SEI film will consume a portion of the Li⁺ in the cathode material, which will lead to irreversible capacity loss of the electrode material. Therefore, this capacity loss can be compensated by pre-supplement of lithium. There are two main types of pre-supplement of lithium, one is the anode material lithium-supplement technology, which has high requirements for the operating environment. The lithium-supplement agent is generally metal lithium foil and inert lithium powder; the other is the cathode material lithium-supplement technology, which has relatively low requirements and a simple method. Li₂S and other lithium-supplementing additives have a high theoretical specific capacity of up to 1166 mAh/g, and do not produce gas after lithium deintercalation, which are promising cathode lithium-supplementing additives.

However, crystalline lithium-supplementing additives such as Li₂S have poor electronic and ionic conductivity, and the particle size of Li₂S on the market is generally at a micro-level, which has a large activation barrier during the first charge process, making it difficult for lithium ions to escape, resulting in a low actual specific capacity. At present, a common solution is the nanominiaturization of the crystalline lithium-supplementing additives such as Li₂S, which can reduce the activation barrier to a certain extent, making it easier for lithium ions to escape and increasing the specific capacity of crystalline lithium-supplementing additives such as Li₂S. However, this solution cannot completely eliminate this activation barrier.

### SUMMARY

### TECHNICAL PROBLEMS

An objective of the embodiments of the present application is to provide a composite lithium-supplementing additive and a preparation method and application thereof to at least solve the problem that the existing crystalline lithium-supplementing additives have a high activation barrier during the first charging process which make the lithium ions difficult to deintercalate.

### SOLUTION TO THE PROBLEM

### TECHNICAL PROPOSALS

In order to solve the above technical problems, the technical proposals adopted in the embodiments of this application are as follows.

In a first aspect, the present application provides a composite lithium-supplementing additive, the composite lithium-supplementing additive comprises a core containing an amorphous lithium-supplementing additive and an encapsulation layer coated on an outer surface of the core.

In a second aspect, a preparation method for a composite lithium-supplementing additive is provided, comprising the following steps:
preparing a core containing an amorphous lithium-supplementing additive; and
preparing an encapsulation layer on the outer surface of the core to obtain a composite lithium-supplementing additive.

In a third aspect, a cathode material is provided, comprising a cathode active material and the above-mentioned composite lithium-supplementing additive.

In a fourth aspect, a cathode plate is provided, the cathode plate comprises the above-mentioned cathode material.

In a fifth aspect, a secondary battery is provided, the secondary battery comprises the above-mentioned cathode plate.

The advantageous effects of the composite lithium-supplementing additive provided by the embodiment of the present application are that it includes a core containing an amorphous lithium-supplementing additive and a carbon encapsulation layer coated on the outer surface of the core. The amorphous lithium-supplementing additive in the core has a lower polarity so that the voltage platform is lower during charging, which can effectively reduce the activation barrier of the lithium-supplementing additive and significantly improve the deintercalation efficiency of lithium ions, thereby achieving a higher lithium-supplementing specific capacity of the additive. The encapsulation layer can not only improve the stability of the lithium-supplementing additive, but also effectively improve the electronic and ionic conductivity of the lithium-supplementing material in the core, enhance the deintercalation of lithium during the charging process, and also play a role in isolating water and oxygen, thereby improving the stability of the lithium-supplementing additive and achieving stable lithium-supplementing effects.

The advantageous effects of the preparation method for a composite lithium-supplementing additive provided in the embodiment of the present application are that: preparing a core containing an amorphous lithium-supplementing additive, so that the composite lithium-supplementing additive has a high lithium ion deintercalation efficiency; and then preparing an encapsulation layer on the outer surface of the core to obtain the composite lithium-supplementing additive. The preparation method of a composite lithium-supplementing additive provided in the present application is simple and efficient, and is suitable for industrial-scale production and application. The prepared composite lithium-supplementing additive has a low activation barrier and is able to basically release all lithium ions at a lower voltage, thereby achieving a higher lithium-supplementing specific capacity.

The advantageous effects of the cathode material provided in the embodiment of the present application are that: it includes a cathode active material and the above-mentioned composite lithium-supplementing additive, the additive has a low activation barrier and is able to basically release all lithium ions at a relatively low voltage and achieve a relatively high lithium-supplementing specific capacity, and thus has a relatively good lithium-supplementing effect in the cathode material. When the cathode material is applied to a battery, it can compensate for the active lithium ions consumed by the formation of the SEI film during the first charge of the battery, thereby effectively maintaining the specific capacity of the cathode plate and improving the capacity retention rate of the cathode plate.

The advantageous effects of the cathode plate provided by the embodiment of the present application are that: it contains the above-mentioned composite lithium-supplementing additive, the activation barrier of the additive is low, and lithium ions can be basically released at a lower voltage, and a higher lithium-supplementing specific capacity can be achieved. Therefore, it can play a better lithium-supplementing effect in the cathode plate, and compensate for the active lithium ions consumed by the formation of the SEI film during the first charge of the battery, thereby effectively maintaining the specific capacity of the cathode plate and improving the capacity retention rate of the cathode plate.

The advantageous effects of the secondary battery provided by the embodiment of the present application are that: since the above-mentioned cathode plate is included, and the cathode plate includes the above-mentioned composite lithium-supplementing additive, which can effectively compensate for the active lithium ions consumed by the formation of the SEI film during the first charge of the battery, effectively maintain the specific capacity of the cathode plate, and improve the capacity retention rate of the cathode plate. Therefore, the secondary battery provided by the present application has high energy density and good capacity retention rate.

### ADVANTAGEOUS EFFECT OF THE INVENTION

### BRIEF DESCRIPTION OF THE DRAWINGS

### DESCRIPTION OF THE DRAWINGS

In order to more clearly illustrate the technical proposals in the embodiments of the present application, the drawings to be used in the description of the embodiments or exemplary technologies will be briefly introduced below. Apparently, the drawings in the following description are only some embodiments of the present application, for those of ordinary skill in the art, other drawings can be obtained based on these drawings without exerting creative efforts.
FIG. 1 is a schematic flow chart of the preparation method for a composite lithium-supplementing additive provided by an embodiment of the present application; and
FIG. 2 is an X-ray diffraction (XRD) diagram of the amorphous lithium sulfide provided in Example 1 of the present application.

### EMBODIMENTS OF THE INVENTION

### DETAILED DESCRIPTION OF THE EMBODIMENTS

In order to make the purpose, technical proposals and advantages of the present application more clear, the present application will be further described in detail below with reference to the drawings and embodiments. It should be understood that the specific embodiments described here are only used to explain the present application and are not used to limit the present application.

In this application, the term "and/or" refers to the association relationship of associated objects, indicating that there may be three relationships. For example, A and/or B may refer to: A exists alone, A and B exist at the same time, and B exists alone. A and B may be singular or plural. The character "/" generally indicates that the associated objects are in an "or" relationship.

In this application, "at least one" means one or more, and "a plurality of" means two or more. "At least one of the following" or similar expressions refers to any combination of these items, including any combination of single items or plural items. For example, "at least one of a, b or c", or "at least one of a, b and c", can both mean: a, b, c, a-b (namely a and b), a-c, b-c, or a-b-c, where a, b, c may be singular or plural.

It should be understood that in the various embodiments of the present application, the size of the serial numbers of the above-mentioned processes does not indicate the order of execution, some or all of the steps can be executed in parallel or sequentially, and the execution order of each process should be determined by its function and internal logic, and should not constitute any limitation on the implementation process of the embodiments of the present application.

A first aspect of the embodiments of the present application provides a composite lithium-supplementing additive, which includes a core containing an amorphous lithium-supplementing additive and an encapsulation layer coated on an outer surface of the core.

The composite lithium-supplementing additive provided in the first aspect of the embodiments of the present application includes a core containing an amorphous lithium-supplementing additive and a carbon encapsulation layer covering the outer surface of the core. The amorphous lithium-supplementing additive in the core has a lower polarity so that the voltage platform is lower during charging, which can effectively reduce the activation barrier of the lithium-supplementing additive and significantly improve the deintercalation efficiency of lithium ions, thereby achieving a higher lithium-supplementing specific capacity of the additive. The encapsulation layer can not only improve the stability of the lithium-supplementing additive, but also effectively improve the electronic and ionic conductivity of the lithium-supplementing material in the core, enhance the deintercalation of lithium during the charging process, and also play a role in isolating water and oxygen, thereby improving the stability of the lithium-supplementing additive and achieving stable lithium-supplementing effects.

In some embodiments, at least one characteristic peak with 2θ between 20° and 30° and at least one characteristic peak having a peak width of 2° to 8° is observed in the X-ray diffraction pattern of the amorphous lithium-supplementing additive. Compared with crystalline lithium-supplementing additives, the characteristic peaks of amorphous lithium sulfide are broader.

In some embodiments, the amorphous lithium-supplementing additive is at least one selected from: amorphous lithium sulfide (Li₂S), lithium nitride (Li₃N), lithium oxide (Li₂O), lithium fluoride (LiF), and lithium phosphide (LisP). These amorphous lithium-supplementing additives not only have good lithium-supplementing effect, but also have small polarization and low activation barrier, which can significantly improve the deintercalation efficiency of lithium ions.

In some embodiments, the encapsulation layer includes at least one of an isolating encapsulation layer, an ionic conductor encapsulation layer, and an electronic conductor encapsulation layer. These encapsulation layers can effectively improve the electronic and ionic conductivity of the lithium-supplementing material in the core, and improve the deintercalation of lithium during the charging process; they can also play a role in isolating moisture, thereby improving the stability of the cathode lithium-supplementing additive and achieving a stable lithium-supplementing effect. In addition, the stability, uniformity of dispersion, and good processibility of the cathode lithium-supplementing additive in the electrode active slurry and active layer can also be ensured.

In some embodiments, the content of the amorphous lithium-supplementing additive in the core is no less than 20%, or no less than 30%, or no less than 50%, or no less than 80%, and so on.

In some embodiments, the mass ratio of the amorphous lithium-supplementing additive to the crystalline lithium-supplementing additive in the core is (20-60):(40-80), or (40-60):(40-60), or (50-60):(40-50). The content of the amorphous lithium-supplementing additive in the core of the embodiment of the present application effectively reduces the activation barrier of the composite lithium-supplementing additive and improves the deintercalation efficiency of lithium ions in the additive, thereby achieving a higher lithium-supplementing specific capacity of the additive. The higher the content of amorphous lithium sulfide, the better the lithium-ion deintercalation effect of the additive.

In some embodiments, the particle size D50 of the core is 40-60 nm, and the thickness of the encapsulation layer is 5-15 nm. The thickness of the encapsulation layer ensures both the specific capacity and electron conductive environment of the composite lithium-supplementing additive. If the encapsulation layer is too thick, the overall specific capacity of the additive will be reduced because the encapsulation layer does not contribute lithium ions; if the encapsulation layer is too thin, the encapsulation layer will not completely cover the core, which is not conducive to a good electronic conductive environment. In addition, the particle size D50 of the core is 40-60 nm, and the core with a small particle size has a larger active specific surface area, which is conducive to the intercalation and deintercalation of lithium ions. If the particle size of the core is too small, the particle agglomeration will be more severe; if the particle size of the core is too large, the specific surface area will be reduced, which will reduce the intercalation and deintercalation efficiency of lithium ions, resulting in poor lithium-supplementing effect of the additive. In some specific embodiments, in the composite lithium-supplementing additive, the thickness of the encapsulation layer may be 5-8 nm, 8-10 nm, 10-13 nm, 13-15 nm, etc., and the particle size D50 of the core may be 40-45 nm, 45-50 nm, 50-55 nm, 55-60 nm, etc.

Based on the structure and performance of the lithium-supplementing additive in the above embodiments, the above-mentioned lithium-supplementing additive of the present application has excellent storage and processability and stable electrochemical performance. After testing, for the cathode directly prepared from the lithium-supplementing additive in the present application, such as the cathode prepared by the cathode lithium-supplementing additive, the binder and the conductive agent, the attenuation rate of the capacity after being stored for 20 hours at an ambient humidity of 25% is no more than 30%, or no more than 14.5% with respect to the capacity stored for 0.5 hour; the attenuation rate of the capacity after being stored for 20 hours at an ambient humidity of 20% is no more than 25%, or no more than 12.2% with respect to the capacity stored for 0.5 hour; and the attenuation rate of the capacity after being stored for 20 hours at an ambient humidity of 10% is no more than 20%, or no more than 8.8% with respect to the capacity stored for 0.5 hour. Thus, it is found that the lithium-supplementing additive in the embodiment of the present application has excellent storage stability and high lithium-supplementing effect and lithium-supplementing stability. Ideally, the above lithium-supplementing additive of the present application is stored in a favorable environment that is dry and oxygen-free, such as a vacuum environment, to achieve the maximum performance of the electrochemical performance of the above lithium-supplementing additive of the present application.

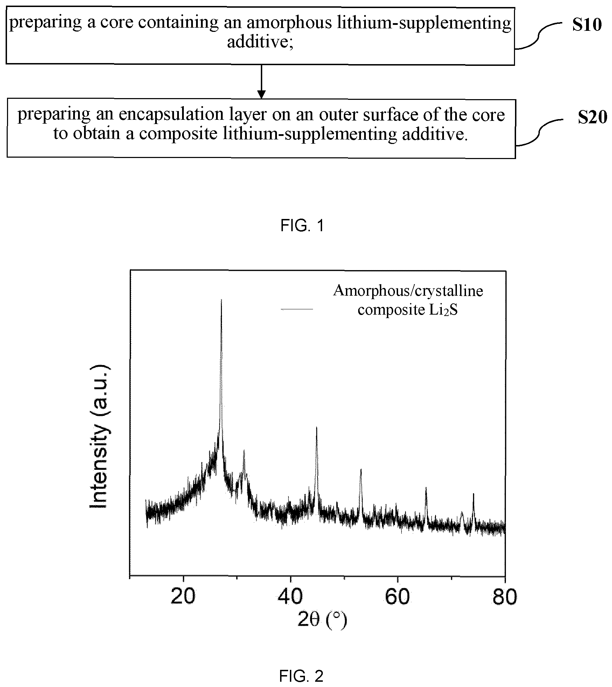

As shown in FIG. 1, a second aspect of the embodiments of the present application provides a preparation method for a composite lithium-supplementing additive, comprising the following steps S10 to S20.

In step S10, a core containing an amorphous lithium-supplementing additive is prepared; and
in step S20, an encapsulation layer is prepared on an outer surface of the core to obtain a composite lithium-supplementing additive.

The preparation method for the composite lithium-supplementing additive provided in the second aspect of the embodiments of the present application prepares a core containing an amorphous lithium-supplementing additive, allow a high lithium-ion deintercalation efficiency of the composite lithium-supplementing additive; and then prepares an encapsulation layer on the outer surface of the core to obtain the composite lithium-supplementing additive. The preparation method for the composite lithium-supplementing additive provided in the embodiment of the present application is simple and highly efficient and is suitable for industrial large-scale production and application. The prepared composite lithium-supplementing additive has a low activation barrier and can basically release all lithium ions at a lower voltage, thereby achieving a higher lithium-supplementing specific capacity.

The embodiments of this application do not specifically limit the preparation method for the amorphous lithium supplement in the above step S10, as long as the amorphous lithium-supplementing additive material can be produced. In some embodiments, a preparation method for a core containing an amorphous lithium-supplementing additive may employ atomic layer deposition.

In some embodiments, the core contains at least one amorphous lithium-supplementing additive selected from the group consisting of amorphous lithium sulfide, amorphous lithium nitride, amorphous lithium oxide, amorphous lithium fluoride, and amorphous lithium phosphide. These amorphous lithium-supplementing additives not only have good lithium-supplementing effect, but also have low polarization and low activation barrier, which can significantly improve the deintercalation efficiency of lithium ions.

In some embodiments, the step of preparing amorphous lithium sulfide includes the following steps S11 to S12.

In step S11, elemental sulfur is dissolved in an organic solvent to obtain a first reaction solution, the terminal group of the organic solvent is an amino group; and
in step S12, the first reaction solution is, under a condensation reflux condition, mixed with elemental lithium to react, and the mixture is separated to obtain amorphous lithium sulfide.

The preparation method for amorphous lithium sulfide provided in the embodiment of the present application dissolves sulfur in an organic solvent having an amino terminal group, and generates amino polysulfide, i.e., the first reaction solution, by a ring-opening reaction between the terminal amino group in the organic solvent and the S8 molecule; then, the amino polysulfide is mixed with elemental lithium to produce amorphous lithium sulfide. Since the reaction process generates a large amount of heat, the reaction process is carried out under condensation reflux conditions to avoid the evaporation of the solution that affects the generation of amorphous lithium sulfide.

In some embodiments, in the above step S11, the organic solvent is at least one selected from propylene diamine and ethylene diamine. The terminal group of the organic solvent used in the embodiment of the present application is an amino group. If the organic solvent is a linear molecule, both ends are amino groups, including but not limited to propylene diamine, ethylene diamine, and the like. The amino groups at the head and tail ends of the organic solvent react with the S8 molecules to generate amino polysulfides, which then react with elemental lithium to generate amorphous lithium sulfide. In addition, the organic solvent can be adsorbed on the surface of the newly formed lithium sulfide through the terminal amino group to prevent the growth of lithium sulfide, thereby preventing lithium sulfide from forming a crystalline state.

In some embodiments, the ratio of the elemental sulfur to the organic solvent is (1-2) g:(50-80) mL. This ratio fully ensures the reaction between elemental sulfur and the organic solvent, and the proportion of the organic solvent is also conducive to the in-situ conversion into a carbon encapsulation layer. In some specific embodiments, the ratio of elemental sulfur to the organic solvent includes but is not limited to 1 g:(50-60) mL, 1 g:(60-70) mL, 1 g:(70-80) mL, 2 g:(50-60) mL, 2 g:(60-70) mL, 2 g:(70-80) mL, and so on.

In some embodiments, in the above step S12, the step of mixing the first reaction solution with elemental lithium to react includes: mixing the first reaction solution with the elemental lithium by dropwise addition to react. Since the reaction between amino polysulfide and elemental lithium is very rapid and a large amount of heat is generated during the reaction, in order to ensure a stable, complete and sufficient reaction, the first reaction solution is mixed with the elemental lithium by adding in a dropwise manner and reacted under condensation reflux condition.

In some embodiments, the mass ratio of elemental lithium to elemental sulfur is 1 :(2-4). This ratio fully ensures the production efficiency of amorphous lithium sulfide. If the amount of elemental lithium is too much or the amount of elemental sulfur is too much, by-products will increase and thus the purity of the product will be reduced.

In some embodiments, after the first reaction solution is mixed with elemental lithium for reaction, the reaction solution is filtered to obtain a solid precipitate, which is then vacuum dried at 40-60°C for 10-24 hrs to obtain amorphous lithium sulfide.

In some embodiments, in the above step S20, the step of preparing an encapsulation layer on the outer surface of the core includes: forming at least one of an isolating encapsulation layer, an ionic conductor encapsulation layer, and an electronic conductor encapsulation layer on the outer surface of the core.

In some embodiments, the material used to prepare the isolating encapsulation layer on the outer surface of the core containing the amorphous lithium-supplementing additive includes at least one of ceramic, high-molecular polymer or carbon material.

In some specific embodiments, when the material of the isolating encapsulation layer is a ceramic layer, the ceramic isolating encapsulation layer may be deposited by, but not limited to, sputtering a ceramic target on the surface of the core containing the amorphous lithium-supplementing additive by magnetron sputtering, the conditions of magnetron sputtering are adjusted according to the specific properties of the target material.

In another specific embodiment, when the material of the isolating encapsulation layer is a high-molecular polymer layer, the step of forming the high-molecular polymer isolating encapsulation layer may be: dispersing the core material in a solution containing the high-molecular polymer, and then vacuum drying to form a dense polymer isolating encapsulation layer on the surface of the core. The solvent of the solution is a solvent that can evenly disperse or dissolve the polymer, such as one or more of N-methylpyrrolidone, methanol, ethanol, isopropanol, acetone, tetrahydrofuran and diethyl ether.

In another specific embodiment, when the material of the isolating encapsulation layer is a carbon material layer, the method for forming the carbon material isolating encapsulation layer includes the following steps: dispersing the core material in a solution containing a carbon source, drying followed by a carbonization treatment, and forming a dense carbon isolating encapsulation layer on the surface of the core. The carbon source may be, but not limited to, PEO, and may also be other carbon sources. Any carbon source that can form a carbon coating layer on the surface of the core is suitable for the present application. Specifically, for example, the core material and PEO are mixed evenly, PEO reaches the melting point at 300°C, and is evenly coated on the surface of the core. The coated material is sintered in an inert atmosphere at 600 degrees Celsius for 16 hours, and a dense carbon layer is formed after sintering.

In some embodiments, the material for preparing the electronic conductor encapsulation layer includes at least one of a carbon material, a conductive polymer, or a conductive oxide; the carbon material, the conductive polymer, and the conductive oxide are all materials of the electronic conductor encapsulation layer contained in the lithium-supplementing additive as described above. The method and conditions for forming the electronic conductor encapsulation layer of the carbon material, the conductive polymer, and the conductive oxide are specifically according to the method for forming the carbon material, the conductive polymer, or the conductive oxide. In some specific embodiments, the method for forming the electronic conductor encapsulation layer can form an isolating conductive encapsulation layer by chemical deposition, magnetron sputtering, or atomic layer deposition.

In some embodiments, the material for preparing the ionic conductor encapsulation layer includes at least one of a perovskite-type, NASICON-type, garnet-type or polymer-type solid electrolyte. The method and conditions for forming the ionic conductor encapsulation layer are specifically according to the method for forming a perovskite-type, NASICON-type, garnet-type or polymer-type solid electrolyte.

In some specific embodiments, the step of preparing a carbon material encapsulation layer on the outer surface of the core containing an amorphous lithium sulfide additive comprises steps S11 to S21.

In step S11, the elemental sulfur is dissolved in an organic solvent having an amino terminal group such as propylene diamine or ethylene diamine to obtain a first reaction solution;
in step S12, the first reaction solution is mixed and reacts with elemental lithium under a condensation reflux condition and is separated to obtain amorphous lithium sulfide; and
in step S21, a carbon coating is applied on the amorphous lithium sulfide by calcination to obtain a composite lithium-supplementing additive.

The composite lithium-supplementing additive prepared in the embodiment of the present application includes a core containing amorphous lithium sulfide. The binding force between Li⁺ and S²⁻ is much weaker in the amorphous state than in the crystalline state. The polarization of lithium sulfide is smaller. During charging, the voltage platform is lower, which can effectively reduce the activation barrier of lithium sulfide and significantly improve the deintercalation efficiency of lithium ions, thereby achieving a higher lithium-supplementing specific capacity of the additive. The carbon encapsulation layer can effectively increase the conductivity of the additive, thereby reducing the polarization of the additive, which is beneficial to the deintercalation of lithium ions from lithium sulfide during charging, thereby increasing the specific capacity.

In some embodiments, in the above step S21, the step of applying a carbon coating on amorphous lithium sulfide by calcination treatment includes: keeping the amorphous lithium sulfide warm for 1-3 hours at an inert atmosphere of 400°C to 500°C to obtain a composite lithium-supplementing additive. In the embodiment of the present application, since there is residual organic solvent in the amorphous lithium sulfide, it can be converted into amorphous carbon in situ by sintering in an inert atmosphere and coated on the surface of the lithium sulfide to form a carbon encapsulation layer. If the temperature is too low, the carbonization is incomplete and the conductivity of the carbon layer is low. If the temperature is too high, due to the poor thermal stability of amorphous lithium sulfide, it may cause excessive conversion of amorphous lithium sulfide into crystals. The sintering temperature of 400°C to 500°C can reduce the proportion of amorphous lithium sulfide converted into lithium sulfide crystals.

In some embodiments, in the composite lithium-supplementing additive, the mass fraction of the encapsulation layer is 20%-40%; the mass fraction of the core is 60%-80%. In the composite lithium-supplementing additive of the embodiment of the present application, the mass ratio of the encapsulation layer and the core simultaneously ensures the specific capacity and electronic conductive environment of the additive. If the content of the encapsulation layer is too high, the overall specific capacity of the additive will be reduced because the encapsulation material does not contribute lithium ions. If the content of the encapsulation layer is too low, a complete and uniformly coated encapsulation layer cannot be formed on the outer surface of the core, and the coating is incomplete, which is not conducive to establishing a good electronic conductive environment. In some specific embodiments, in the composite lithium-supplementing additive, the mass fraction of the encapsulation layer may be 20%, and the mass fraction of the core is 80%, or the mass fraction of the encapsulation layer may be 30%, and the mass fraction of the core is 70%, or the mass fraction of the encapsulation layer may be 40%, and the mass fraction of the core is 60%, and so on. In some specific embodiments, in the composite lithium-supplementing additive, the thickness of the encapsulation layer is 5-15 nm, and the particle size D50 of the core is 40-60 nm.

In the core of the composite lithium-supplementing additive of the embodiment of the present application, compared with crystalline lithium sulfide, the amorphous lithium-supplementing additive has low polarization, a lower voltage platform during charging, and can release more lithium ions under the same voltage window, so that the specific capacity is higher. In addition, it basically does not produce gas and has good chemical stability. Therefore, the higher the content of the amorphous lithium-supplementing additive in the core of the composite lithium-supplementing additive, the more conducive it is to lithium-ion deintercalation, so that the additive has higher electrochemical properties such as specific capacity.

In some embodiments, in the core of the composite lithium-supplementing additive, the mass percentage of the amorphous lithium-supplementing additive is no less than 20%, which effectively improves the deintercalation of the lithium ion in the additive, increases the specific capacity of the additive, and thus improves the lithium-supplementing effect of the additive in the cathode. In some embodiments, in the core of the composite lithium-supplementing additive, the mass percentage of amorphous lithium sulfide is 20%-60%, and the mass percentage of crystalline lithium sulfide is 40%-80%, or the ratio of amorphous lithium sulfide to crystalline lithium sulfide is (40-60):(40-60), or the ratio of amorphous lithium sulfide to crystalline lithium sulfide is (50-60):(40-50).

In a third aspect, an embodiment of the present application further provides a cathode material. The cathode material of the embodiment of the present application includes a cathode active material and a cathode lithium-supplementing additive of the above embodiment of the present application. Such that, the cathode material of the embodiment of the present application has excellent lithium replenishing performance and good processibility and so that the quality of the cathode active material layer is improved, thereby improving the quality of the cathode active material layer and the electrochemical performance of the corresponding cathode plate.

In the embodiment, the content of the above cathode lithium-supplementing additive in the cathode material of the embodiment of the present application can be controlled. The mass content of the cathode material in the cathode active layer of the embodiment of the present application may be 1.5%-5.5%, or may be 2.0%.

In some embodiments, the mass percentage of the composite lithium-supplementing additive in the cathode material is 0.1%-4%, and this proportion can just compensate for the loss of active lithium in the battery during the first charging process. If the amount of the composite lithium-supplementing additive added to the cathode plate is too low, the loss of active lithium in the cathode material cannot be fully replenished, which is not conducive to improving the energy density and capacity retention rate of the battery. If the amount of the composite lithium-supplementing additive added to the cathode material is too high, lithium precipitation on the anode may become serious and increase the cost. In some specific embodiments, in the cathode material, the mass percentage of the composite lithium-supplementing additive may be 0.1%, 0.3%, 0.5%, 0.8%, 1%, 2%, 3%, 4%, and the like.

In other embodiments, the cathode active material contained in the cathode material of the embodiment of the present application may be a phosphate cathode active material and a ternary cathode active material. In a specific embodiment, this includes one or more of lithium cobalt oxide, lithium manganese oxide, lithium iron phosphate, lithium manganese iron phosphate, lithium vanadium phosphate, lithium vanadium oxyphosphate, lithium vanadium fluorophosphate, lithium titanate, lithium nickel cobalt manganese oxide, and lithium nickel cobalt aluminum oxide.

A fourth aspect of the embodiments of the present application provides a cathode plate, which includes the composite lithium-supplementing additive prepared by the above method, or the above composite lithium-supplementing additive.

The cathode plate provided in the fourth aspect of the embodiments of the present application includes the above-mentioned composite lithium-supplementing additive. The additive has a low activation barrier and can release basically all lithium ions at a lower voltage, thereby achieving a higher lithium-supplementing specific capacity. Therefore, it shows a better lithium-supplementing effect in the cathode plate, compensating for the active lithium ions consumed by the formation of the SEI film during the first charging process of the battery, thereby effectively maintaining the specific capacity of the cathode plate and improving the capacity retention rate of the cathode plate.

In some embodiments, the cathode plate includes a current collector and an active material layer that are laminated and bonded, and the mass percentage of the composite lithium-supplementing additive in the active material layer is 0.1%-4%, which can just compensate for the loss of active lithium in the battery during the first charging process. If the amount of the composite lithium-supplementing additive added to the cathode plate is too low, the loss of active lithium in the cathode material cannot be fully replenished, which is not conducive to improving the energy density and capacity retention rate of the battery. If the amount of the composite lithium-supplementing additive added to the cathode plate is too high, lithium precipitation on the anode may become serious and increase the cost. In some specific embodiments, the mass percentage of the composite lithium-supplementing additive in the active material layer of the cathode plate may be 0.1 %, 0.3%, 0.5%, 0.8%, 1%, 2%, 3%, 4%, and the like.

In some embodiments, the cathode active material in the cathode plate includes but is not limited to at least one of lithium iron phosphate, lithium cobalt oxide, lithium manganese iron phosphate, lithium manganese oxide, lithium nickel cobalt manganese oxide, and lithium nickel manganese oxide. These cathode materials have high specific capacity, which is beneficial to improving the energy density of the battery.

In some embodiments, the cathode plate also includes a cathode current collector, and the cathode active layer also includes components such as a conductive agent and a binder. The embodiments of the present application do not specifically limit these materials, and appropriate materials can be selected according to actual application requirements.

In some embodiments, the cathode current collector includes but is not limited to any one of copper foil and aluminum foil.

In some embodiments, the content of the binder in the cathode active layer is 2 wt%-4 wt%. In a specific embodiment, the content of the binder may be a typical but non-limiting content such as 2 wt%, 3 wt%, 4 wt% and the like. In a specific embodiment, the binder includes one or more of polyvinylidene chloride, soluble polytetrafluoroethylene, styrene-butadiene rubber, hydroxypropyl methylcellulose, methylcellulose, carboxymethyl cellulose, polyvinyl alcohol, acrylonitrile copolymer, sodium alginate, chitosan and chitosan derivatives.

In some embodiments, the content of the conductive agent in the cathode active layer is 3 wt%-5 wt%. In a specific embodiment, the content of the conductive agent may be a typical but non-limiting content such as 3 wt%, 4 wt%, 5 wt% and the like. In a specific embodiment, the conductive agent includes one or more of graphite, carbon black, acetylene black, graphene, carbon fiber, C60 and carbon nanotubes.

In some embodiments, the preparation process of the cathode plate is as follows: mixing the cathode active material, the composite lithium-supplementing additive, the conductive agent and the binder to obtain an electrode slurry, coating the electrode slurry on the current collector, and preparing the cathode plate through steps such as drying, rolling, and die cutting.

A fifth aspect of embodiments of the present application provides a secondary battery, which includes the above-mentioned cathode plate.

The secondary battery provided in the fifth aspect of the embodiments of the present application includes the above-mentioned cathode plate, and the cathode plate is added with the above-mentioned composite lithium-supplementing additive, which can effectively compensate for the active lithium ions consumed by the formation of the SEI film during the first charging cycle of the battery, effectively maintain the specific capacity of the cathode plate, and improve the capacity retention rate of the cathode plate. Therefore, the secondary battery provided in the embodiment of the present application has high energy density and good capacity retention rate.

The secondary battery in the embodiment of the present application may be a lithium-ion battery or a lithium-metal battery.

The anode plate, electrolyte, separator, and the like of the secondary battery in the embodiment of the present application are not specifically limited and can be applied to any battery system.

In order to make the above implementation details and operations of the present application clearly understood by those skilled in the art, and to significantly reflect the progressive performance of the composite lithium-supplementing additive and preparation method thereof, cathode plate, and secondary battery in the embodiments of the present application, the above technical proposals are exemplified through the following Examples.

### Example 1

**A composite Li₂S lithium-supplementing additive,** the preparation of which includes the following steps:
1 g of sulfur was dissolved in 50 mL of propylene diamine, after being completely dissolved, the solution was slowly added dropwise into a flask containing about 0.5 g of lithium bars under condensation and reflux conditions to avoid solvent loss, until all lithium was consumed. the reaction solution was filtered to obtain amorphous lithium sulfide, which was then vacuum dried for 12 hrs. The dried precipitate was placed in a corundum boat. A tube furnace was passed with argon, heated to 400°C and kept for 2 hrs to obtain a carbon-coated composite lithium-supplementing additive, which was recorded as H-Li₂S@C-1.

**A lithium-ion battery,** the preparation of which includes the following steps:
① Preparation of cathode plate: The composite lithium-supplementing additive and lithium cobalt oxide were mixed in a mass ratio of 5:90 to obtain a mixture, and the mixture was mixed with SP:PVDF in a mass ratio of 95:2:3 and ball-milled for 60 min; the speed was set to 30 Hz; a cathode plate was prepared after homogenization-coating-drying-slitting processes, and the cathode plate was baked in a vacuum oven at 100°C to remove trace water;
② Anode plate: lithium metal sheet with a diameter of 16 mm;
③ Electrolyte: 1 mol/L LiPF₆ solution, the solvent was composed of EC (ethylene carbonate) and DEC (diethyl carbonate) in a volume ratio of 1:1;
④ Separator: polypropylene microporous separator.
⑤ Lithium-ion battery assembly: the lithium-ion battery was assembled in an inert atmosphere glove box in the order of lithium metal sheet-separator-electrolyte-cathode plate.

### Example 2

**A composite Li₂S lithium-supplementing additive,** which differs from Example 1 in that the organic solvent was replaced by ethylenediamine, and the product was marked as H-Li₂S@C-2.

**A lithium-ion battery,** which differs from Example 1 in that the lithium-supplementing additive in the cathode plate adopted the composite lithium-supplementing additive prepared in Example 2.

### Example 3

**A composite Li₂S lithium-supplementing additive,** which differs from Example 1 in that the obtained carbon-coated Li₂S composite lithium-supplementing additive was subjected to secondary carbon coating by means of a solvothermal method to achieve a higher coverage coating, and the product was marked as H-Li₂S@C-3.

**A lithium-ion battery,** which differs from Example 1 in that the lithium-supplementing additive in the cathode plate adopted the composite lithium-supplementing additive prepared in Example 3.

### Example 4

**A composite Li₂S lithium-supplementing additive,** which differs from Example 1 in that the heat treatment temperature of the dried precipitate was reduced from 400°C to 300°C, and the amorphous part of the obtained composite lithium-supplementing additive accounted for a higher proportion. The product was marked as H-Li₂S@C-4.

**A lithium-ion battery,** which differs from Example 1 in that the lithium-supplementing additive in the cathode plate adopted the composite lithium-supplementing additive prepared in Example 4.

### Example 5

**A composite LiF lithium-supplementing additive,** which was produced as follows: a LiF film was grown on a silicon wafer by radio frequency sputtering (radio frequency power: 30 W, with pure argon flow, and the ambient pressure was maintained at 10⁻² mbar). The obtained material was a crystalline/amorphous composite lithium-supplementing additive. The obtained film was ball milled followed by sieving, and carbon-coated by a solvothermal method to obtain H-LiF@C.

### Example 6

**A composite Li₃N lithium-supplementing additive,** purchased Li₃N powder (Aladdin, L303263 lithium nitride, 99.9%) was placed in a tantalum boat and evaporated by resistance heating, the total evaporation pressure in the vacuum chamber remained unchanged, the boat temperature was adjusted to 550°C-800°C at 50 mPa, and crystalline/amorphous composite Li₃N was deposited on a substrate, ball milled and crushed, and carbon-coated by a solvothermal method after sieving, and the obtained sample was recorded as H-LisN@C.

### Comparative Example 1

Commercially available crystalline Li₂S (Aladdin, L166537, 99.98%) was purchased, mixed with PVP and heat treated at 700°C to obtain a crystalline Li₂S@C-1 composite material.

### Comparative Example 2

Li₂SO₄ and PVP were ball-milled and mixed, and then heat-treated at 800°C in an inert atmosphere to obtain a crystalline Li₂S@C-2 composite material.

### Comparative Example 3

In an inert atmosphere, lithium metal and CoF₃ powder were mixed in a molar ratio of 3:1 and heated to 240°C. The lithium became a molten state and the mixture was mechanically stirred to react and generate a crystalline Co/LiF composite material.

### Comparative Example 4

A certain amount of lithium foil was placed in a tubular furnace, with the continuous introduction of 100 sccm of nitrogen, heated to 300°C and kept for 24 hrs to obtain crystalline Li₃N, which was then ball-milled and carbon-coated through a solvothermal method to obtain crystalline Li₃N@C.

In order to verify the progress of the embodiments of the present application, the materials prepared in Examples 1 to 6 and Comparative Examples 1 to 4 were respectively subjected to the following performance tests:

### Relevant Characteristics Tests

1. The amorphous lithium sulfide prepared in Example 1 was subjected to an XRD test. The test results are shown in FIG.2. The XRD characteristic peaks of the amorphous lithium sulfide prepared in Example 1 are the same as those of the crystalline lithium sulfide, and the characteristic peaks of the amorphous lithium sulfide are wider. Obvious characteristic peaks are observed at 2θ between 20° and 30°, and the width of at least one characteristic peak reaches 8°.
2. Moisture resistance test of cathode lithium-supplementing additives:

In order to evaluate the moisture resistance of the above-mentioned lithium-supplementing material, in the present application, the above-mentioned composite lithium-supplementing additive, conductive agent and binder were mixes to prepare the electrode (without adding a cathode active material), and the specific steps are as follows: the lithium-supplementing material from each Example or Comparative Example was each mixed with SP and PVDF in a mass ratio of 80:8:12 and stirred by ball milling for 60 min; the speed was set to 30 Hz; homogenization-coating-drying-cutting operations were performed, and cathode plates were prepared respectively. The cathode plates were baked in a vacuum oven at 100°C to remove trace water. Except for the cathode, the rest of the battery components are consistent with those mentioned above and unchanged.

Here, Example 1 is taken as an example and Comparative Example 1 is taken as a reference to test the specific capacity of the electrode of Example 1 under varying humidity conditions (25%, 20%, and 10%) placed for different periods of time. The results are shown in Tables 2, 3, and 4 below:

**Table 2**

| Example | Humidity 25%, placed for different durations (h) | Specific capacity (mAh/g) |
|---|---|---|
| Example 1 | 0.5 | 658.9 |
| | 1 | 633.1 |
| | 2 | 614.2 |
| | 5 | 595.4 |
| | 10 | 579.3 |
| | 20 | 562.9 |
| Comparative Example 1 | 0.5 | 430.6 |

**Table 3**

| Example | Humidity 20%, placed for different durations (h) | Specific capacity (mAh/g) |
|---|---|---|
| Example 1 | 0.5 | 664.8 |
| | 1 | 643.9 |
| | 2 | 626.7 |
| | 5 | 611.2 |
| | 10 | 597.3 |
| | 20 | 583.4 |

**Table 4**

| Example | Humidity 10%, placed for different durations (h) | Specific capacity (mAh/g) |
|---|---|---|
| Example 1 | 0.5 | 669.6 |
| | 1 | 654.3 |
| | 2 | 641.7 |
| | 5 | 629.4 |
| | 10 | 619.1 |
| | 20 | 610.3 |

It can be seen from the above test results that the cathode plate (without cathode active material) prepared by the cathode composite lithium-supplementing additive in Example 1 of the present application was stored at varying humidities, and the specific capacity of the battery did not change significantly. Under the humidity of 25%, 20%, and 10%, the attenuation rate of the specific capacity after 20 hours relative to that after 0.5 hours is 14.5%, 12.2%, and 8.8%, respectively. The lower the humidity, the smaller the change in specific capacity. It can be seen that the composite lithium-supplementing additive in the embodiments of the present application not only shows a good lithium-supplementing effect in the cathode plate, but also has good stability and provides stable lithium supplementation.

### 3. Electrochemical performance tests for lithium-ion batteries:

The composite lithium-supplementing additives prepared in Examples 1 to 6 and Comparative Examples 1 to 4 were assembled into the same lithium-ion button cells (with the composite lithium-supplementing additive as a variable) under the same conditions, and the performance was tested according to the following methods: the button cells were charged to 4.3 V under a constant current and constant voltage at a rate of 0.05 C, the cut-off current was 0.01 C, left for 5 min, and discharged to 3.0 V at a rate of 0.05 C. The relevant performance test results are shown in Table 1 below.

**Table 1**

| **Target Materials** | **First charge specific capacity** (mAh/g) | **Specific capacity increment** (mAh/g) |
|---|---|---|
| 90%LCO+5% Composite H-Li₂S@C-1 cathode lithium-supplementing additive of Example 1 | 177.3 | 27.9 |
| 90%LCO+5% Composite H-Li₂S@C-2 cathode lithium-supplementing additive of Example 2 | 171.4 | 22 |
| 90%LCO+5% Composite H-Li₂S@C-3 cathode lithium-supplementing additive of Example 3 | 175.9 | 26.5 |
| 90%LCO+5% Composite H-Li₂S@C-4 cathode lithium-supplementing additive of Example 4 | 171.0 | 21.6 |
| 90%LCO+5% Composite H-LiF@C cathode lithium-supplementing additive of Example 5 | 166.5 | 17.1 |
| 90%LCO+5% Composite H-Li₃N@C cathode lithium-supplementing additive of Example 6 | 169.2 | 19.8 |
| 95%LCO+0%LNP (control group) | 149.4 | / |
| 90%LCO+5%Comparative Example 1 Crystalline Li₂S@C-1 | 166.5 | 17.1 |
| 90%LCO+5% Crystalline Li₂S@C-2 of Comparative Example 2 | 164.3 | 14.9 |
| 90%LCO+5% Crystalline Co/LiF of Comparative Example 3 | 158.7 | 9.3 |
| 90%LCO+5% Crystalline Li₃N@C of Comparative Example 4 | 163.6 | 14.2 |

As can be seen from Table 1 above, compared to the lithium-ion battery without lithium-supplementing additive (control group) and the lithium-ion batteries with crystalline Li₂S@C prepared in Comparative Examples 1-2, the lithium-ion batteries with the composite Li₂S lithium-supplementing additive prepared in Examples 1-4 of the present application exhibits a better first charge specific capacity, and the specific capacity increment is higher, indicating that lithium ions are more easily extracted from the amorphous Li₂S and the lithium-ion deintercalation efficiency is high, thereby achieving a higher lithium-supplementing specific capacity of the additive. Similarly, by comparing Example 5 with Comparative Example 3, and by comparing Example 6 with Comparative Example 4, it can also be seen that similar patterns are observed in LiF and Li₃N lithium-supplementing additives. The above results show the advantages of amorphous/crystalline composite structure lithium-supplementing additives in terms of lithium deintercalation and performances.

The above are only optional embodiments of the present application and are not used to limit the present application. Various modifications and variations may be made to this application by those skilled in the art. Any modifications, equivalent substitutions, improvements, and the like made within the spirit and principles of this application shall be included in the scope of the appended claims of this application.

## Claims

1. A composite lithium-supplementing additive, **characterized by** comprising a core containing an amorphous lithium-supplementing additive and an encapsulation layer coated on an outer surface of the core.

2. The composite lithium-supplementing additive as claimed in claim 1, wherein the amorphous lithium-supplementing additive is at least one selected from: amorphous lithium sulfide, amorphous lithium nitride, amorphous lithium oxide, amorphous lithium fluoride, and amorphous lithium phosphide.

3. The composite lithium-supplementing additive as claimed in claim 1, wherein, in X-ray diffraction pattern of the amorphous lithium-supplementing additive, at least one characteristic peak with 2θ between 20° and 30° is observed, and at least one characteristic peak has a peak width of 2° to 8°.

4. The composite lithium-supplementing additive as claimed in claim 1, wherein the encapsulation layer includes at least one of an isolating encapsulation layer, an ionic conductor encapsulation layer, and an electronic conductor encapsulation layer.

5. The composite lithium-supplementing additive as claimed in claim 1, wherein a content of the amorphous lithium-supplementing additive in the core is no less than 20%.

6. The composite lithium-supplementing additive as claimed in claim 1, wherein a mass ratio of the amorphous lithium-supplementing additive to a crystalline lithium-supplementing additive in the core is (20-60):(40-80).

7. The composite lithium-supplementing additive as claimed in claim 1, wherein a particle size D50 of the core is 40 to 60 nm, and a thickness of the encapsulation layer is 5 to 15 nm.

8. The composite lithium-supplementing additive as claimed in any one of claims 1 to 7, wherein, for a cathode plate prepared by the composite lithium-supplementing additive, a binder and a conductive agent, an attenuation rate of a capacity of the cathode plate after being stored for 20 hours at an ambient humidity of 25% is no more than 30% with respect to a capacity thereof after being for 0.5 hour.

9. The composite lithium-supplementing additive as claimed in any one of claims 1 to 7, wherein, for a cathode plate prepared by the composite lithium-supplementing additive, a binder and a conductive agent, an attenuation rate of a capacity of the cathode plate after being stored for 20 hours at an ambient humidity of 20% is no more than 25% with respect to a capacity thereof after being for 0.5 hour.

10. The composite lithium-supplementing additive as claimed in any one of claims 1 to 7, wherein, for a cathode plate prepared by the composite lithium-supplementing additive, a binder and a conductive agent, an attenuation rate of a capacity of the cathode plate after being stored for 20 hours at an ambient humidity of 10% is no more than 20% with respect to a capacity thereof after being for 0.5 hour.

11. A preparation method for a composite lithium-supplementing additive, **characterized by** comprising steps of:
preparing a core containing an amorphous lithium-supplementing additive; and
preparing an encapsulation layer on an outer surface of the core to obtain a composite lithium-supplementing additive.

12. The preparation method for a composite lithium-supplementing additive as claimed in claim 11, wherein the core contains at least one amorphous lithium-supplementing additive selected from the group consisting of amorphous lithium sulfide, amorphous lithium nitride, amorphous lithium oxide, amorphous lithium fluoride, and amorphous lithium phosphide.

13. The preparation method for a composite lithium-supplementing additive as claimed in claim 11, wherein the step of preparing an encapsulation layer on an outer surface of the core comprises: forming at least one of an isolating encapsulation layer, an ionic conductor encapsulation layer, and an electronic conductor encapsulation layer on the outer surface of the core.

14. The preparation method for a composite lithium-supplementing additive as claimed in claim 12, wherein a step of preparing the amorphous lithium sulfide comprises:
dissolving elemental sulfur in an organic solvent to obtain a first reaction solution, wherein a terminal group of the organic solvent is an amino group; and
mixing, under a condensation reflux condition, the first reaction solution with elemental lithium to react, and separating a mixture obtained to obtain the amorphous lithium sulfide.

15. The preparation method for a composite lithium-supplementing additive as claimed in claim 14, wherein the organic solvent is at least one selected from propylene diamine and ethylene diamine; and/or
the step of mixing the first reaction solution with elemental lithium to react comprises mixing the first reaction solution with the elemental lithium by dropwise addition to react; and/or
a ratio of the elemental sulfur to the organic solvent is (1-2) g:(50-80) mL; and/or
a mass ratio of the elemental lithium to the elemental sulfur is 1:(2-4).

16. A cathode material, **characterized by** comprising a cathode active material and the composite lithium-supplementing additive as claimed in any one of claims 1 to 10, or the composite lithium-supplementing additive prepared by the preparation method as claimed in any one of claims 11 to 15.

17. The cathode material as claimed in claim 16, wherein a mass percentage of the composite lithium-supplementing additive in the cathode material is 0.1%-4%.

18. A cathode plate, **characterized by** comprising the cathode material as claimed in claim 17.

19. A secondary battery, **characterized by** comprising the cathode plate as claimed in claim 18.
